# EUROPÄISCHE PATENTSCHRIFT

(11) **EP 2 719 908 B1**
(45) Veröffentlichungstag und Bekanntmachung des Hinweises auf die Patenterteilung: **19.04.2017**
(21) Anmeldenummer: 12007037.0
(22) Anmeldetag: 11.10.2012
(51) Int. Cl.: F16B 37/04

(54) **BEFESTIGUNGSMITTEL ZWISCHEN EINEM BAUTEIL UND EINEM BAUELEMENT**
Fixing means between a component and another component
Moyen de fixation entre un composant et un élément de construction

(43) Veröffentlichungstag der Anmeldung: 16.04.2014
(73) Patentinhaber: Asco Numatics GmbH, 75248 Ölbronn-Dürrn (DE)
(72) Erfinder: Rusak, Marcin, 94-045 Lodz (PL); Wegehingel, Stefan, 75180 Pforzheim (DE)
(74) Vertreter: Witte, Weller & Partner Patentanwälte mbB

(56) Entgegenhaltungen:
- WO-A1-01/81776
- US-A- 5 199 836

## Beschreibung

Die Erfindung bezieht sich auf ein Befestigungsmittel zwischen einem Bauteil und einem Bauelement, mit zumindest einem an diesen lösbar angreifenden Bolzen. Die Erfindung bezieht sich insbesondere auf einen aus einem rohrförmigen Element gebildeten Sammeltank mit zumindest einer flachen Außenseite, auf der ein Ventil mit seiner ebenen Anlagefläche angeordnet und über zumindest einen Bolzen lösbar befestigt ist. Somit kann es sich bei dem Bauteil um einen Sammeltank und bei dem Bauelement um ein Ventil handeln.

Aus der WO 01/81776 A1 ist ein Nutenstein für eine Schraubverbindung bekannt, der einen im Wesentlichen rechteckigen Block umfasst, der eine kurze Seite aufweist, die im Wesentlichen einer Breite eines äußeren Nutabschnitts einer T-förmigen Nut entspricht, wobei der Nutenstein ferner eine lange Seite aufweist, die im wesentlichen der Breite eines inneren Nutabschnitts entspricht, wobei der Nutenstein längsverschieblich in der Nut platzierbar ist.

Aus der US 5,199,836 A ist ein T-Nutenstein zur Verwendung in einer Werkzeugmaschine mit einem integrierten Arbeitstisch mit einer T-Nut bekannt, die einen unteren breiten Abschnitt und einen oberen engen Abschnitt aufweist und ferner mit oberen Flachabschnitten versehen ist, die sich vom oberen engen Abschnitt zu den Seiten des unteren breiten Abschnitts erstrecken, wobei der T-Nutenstein einen einstückigen Teil umfasst, der einen großen unteren Kopf und einen kleinen oberen Schaft umfasst, wobei eine Länge des Kopfes größer als eine Breite des Kopfes ist, und wobei die Länge an die Breite des unteren breiten Abschnitts der T-Nut angepasst ist, und wobei die Breite im Wesentlichen der Breite des oberen engen Abschnitts der T-Nut entspricht.

Übliche Befestigungsmittel weisen z. B. am Bauteil Durchgangslöcher oder Gewindebohrungen auf, während am jeweiligen Bauelement z. B. Durchgangsbohrungen vorgesehen sind, durch die zur Befestigung dienende Bolzen hindurchgreifen, die entweder in die Gewindebohrungen des Bauteiles eingeschraubt werden oder die dortigen Bohrungen durchsetzen und am herausragenden Ende Muttern tragen. Derartige Befestigungsmittel benötigen im Bauteil an vorgegebener Stelle Durchgangsbohrungen oder Gewindebohrungen. Die Herstellung ist aufwendig. Durch diese ist die Position zu befestigender Bauelemente vorgegeben. Die Montage und eine etwaige Demontage derart befestigter Bauelemente erfordert einen entsprechenden Aufwand, auch an Zeit. Als alternative Befestigungsmittel sind solche üblich, durch die am Bauteil zu befestigende Bauelemente bleibend fixiert werden. Dies geschieht durch Schweißen, Löten oder dergleichen. Derartige Befestigungen stehen einer Demontage so befestigter Bauelemente entgegen.

Der Erfindung liegt die Aufgabe zugrunde, ein Befestigungsmittel der eingangs genannten Art zu schaffen, das eine schnelle und einfache Montage und Demontage an einem Bauteil befestigter Bauelemente gestattet, ohne die Notwendigkeit der Entfernung oder des kompletten Austauschs des Bauteils. Auch soll die Möglichkeit für eine flexible Positionierung der Bauelemente am Bauteil nach Wahl des Monteurs eröffnet werden. Die Herstellung des Bauteils und/oder der Bauelemente soll ferner vereinfacht und kostengünstiger werden einschließlich Reduzierung der Fertigungszeiten.

Die Aufgabe wird gelöst durch einen aus einem rohrförmigen Element gebildeten Sammeltank mit zumindest einer flachen Außenseite, auf der ein Ventil mit seiner ebenen Anlagefläche angeordnet und über zumindest einen Bolzen lösbar befestigt ist, wobei der zumindest eine Bolzen einen in Richtung quer zur Bolzenachse verdickten Kopf trägt, das Ventil durchsetzt, und an dem Ventil mit einem von dem Kopf abgewandten Schraubenkopf angreift, und wobei an der flachen Außenseite des Sammeltanks zumindest eine Nut für den Kopf vorgesehen ist, die eine den Kopf in der Befestigungsposition formschlüssig übergreifende Hinterschneidung enthält. In vorteilhafter Weise ist die Nut als T-Nut ausgebildet, wobei der verdickte Kopf am Ende einen Querriegel hat und so vorzugsweise T-förmig verdickt ist. Der Querriegel passt in die Nut und ist dann, wenn dieser quer in der Nut enthalten ist, formschlüssig von der Hinterschneidung übergriffen, die durch mindestens einen Steg gebildet ist, der an einer Nutflanke der Nut vorgesehen ist und quer in die Nut vorspringt und dabei die Nutbreite verkleinert. Weitere vorteilhafte Ausgestaltungen und Erfindungsmerkmale ergeben sich aus den Unteransprüchen.

Man erkennt, dass die Verhältnisse zwischen dem Bauteil und dem mindestens einen Bauelement auch vertauscht sein können, derart, dass die Nut Bestandteil des Bauelements ist und der Bolzen das Bauteil durchsetzt und dessen endseitiger Kopf in die Nut des Bauelements formschlüssig eingreift.

Das Bauteil kann aus einem rohrförmigen Profil, z. B. einem Sammler, Tank, Sammeltank oder dergleichen bestehen. Als Bauelemente kommen z. B. Ventile, Einlassventile, Auslassventile, Anschlußelemente. Druckanschlüsse oder dergleichen in Betracht.

In besonders einfacher Form durchsetzen die Bolzen Durchbrüche oder Löcher in den Bauelementen und tragen am unteren Ende den verdickten Kopf in Form eines T-förmigen Querriegels. Der Bolzen kann mit einem endseitigen Gewindeabsatz in ein Innengewinde des verdickten Kopfes eingeschraubt sein oder in besonderen Anwendungsfällen auch damit einstückig sein. Die Befestigung in der T-Nut erfolgt in der Weise, dass der Querriegel zunächst in Längsrichtung der Nut ausgerichtet wird und der Bolzen nach Einbringen in die Nut um etwa 90 Grad gedreht wird, derart, dass der Querriegel nunmehr quer zum Nutverlauf gerichtet ist und von der Hinterschneidung der Nut in Form der quer vorspringenden Stege formschlüssig und so übergriffen wird, dass der Querriegel in der Nut gehalten ist. Durch Anziehen des Bolzens kann sodann das jeweilige Bauelement am Bauteil endgültig fest und dicht fixiert werden und die gewählte Position des Bauelements am Bauteil gesichert werden.

Sieht man von etwaigen, für die Funktion notwendigen Durchbrüchen im Bauteil ab, kann der Benutzer die Befestigungsstelle für das Bauelement im Wesentlichen frei auswählen. Es ist eine schnelle, einfache Montage eines Bauelements am Bauteil, insbesondere z. B. eines Ventils an einem Tank, z. B. Sammeltank eines Staubfilter-Tanksystems, möglich, wie auch in gleicher Weise eine schnelle und einfache Demontage bei Schäden am Bauelement. Dabei kann das Bauteil an Ort und Stelle verbleiben. Die jeweilige Nut als Element des Befestigungsmittels ist einfach und kostengünstig herstellbar, z. B. bei einem das Bauteil bildenden solchen Rohrprofil, das durch Extrudieren hergestellt wird, bei dem zugleich auch die eine Nut oder mehrere Nuten mit gebildet werden können. In vorteilhafter Weise besteht ein solches Bauteil dann z. B. aus Aluminium.

Weitere Einzelheiten und Vorteile der Erfindung ergeben sich aus der nachfolgenden Beschreibung und aus den Zeichnungen.

Die Erfindung ist nachfolgend anhand eines in den Zeichnungen gezeigten Ausführungsbeispiels näher erläutert. Es zeigen:
Fig. 1 eine schematische perspektivische Ansicht eines Bauteils in Gestalt eines Sammeltanks mit daran befestigten Bauelementen in Form z. B. von Tankelementen,
Fig. 2 eine schematische Seitenansicht mit teilweiser perspektivischer Ansicht des Bauteils mit einem Befestigungsmittel,
Fig. 3 eine schematische perspektivische Ansicht eines Teils des Bauteils sowie zweier daran zu befestigender Bauelemente,
Fig. 4 einen schematischen Schnitt mit teilweiser Seitenansicht des Sammeltanks entlang der Linie IV-IV in Fig. 1

In den Zeichnungen ist schematisch ein Sammeltank als Bauteil 10 gezeigt, an dem einzelne Bauelemente 11 bis 15 oberseitig lösbar befestigt sind, die in verschiedenster Weise gestaltet sind, z. B. als Ventile, Einlasselemente, Auslasselemente, Anschlußelemente oder dergleichen.

Als Bauteil 10 ist hier ein etwa rohrförmiger Tank mit einem Rohrprofil 22 dargestellt, der endseitig mittels Stirndeckeln 16, 17 verschlossen ist, die z. B. mittels längs durchgehender Längsstäbe 18 bis 21 mit dem Rohrprofil 22 verspannt sind. Das Rohrprofil 22 besteht z. B. aus Aluminium. Es weist oberseitig und unterseitig jeweils flache, ebene Flächen 23 und 24 auf, an denen die einzelnen Bauelemente 11 bis 15 mit entsprechenden ebenen Anlagefläche 25, 26 im angebrachten Zustand dicht und fest anliegen können.

Zwischen dem Bauteil 10 einerseits und den einzelnen Bauelementen 11 bis 15 andererseits sind nachfolgend näher beschriebene Befestigungsmittel wirksam, die der lösbaren Befestigung der Bauelemente 11 bis 15 am Bauteil 10 dienen, wobei die Bauelemente 11 bis 15 bedarfsweise jederzeit vom Bauteil 10 gelöst, bedarfsweise an anderer Stelle des Bauteils 10 wieder angebracht und generell leicht und einfach montiert und demontiert werden können. Das Bauteil 10 benötigt für die Befestigung der Bauelemente 11 bis 15 keine Befestigungslöcher. Die Befestigungsmittel ermöglichen für den Monteur eine Flexibilität, sind einfach, kostengünstig und mit kurzer Bearbeitungszeit herstellbar, sind unkompliziert und gestatten eine einfache und schnelle Montage bzw. Demontage jeweiliger Bauelemente 11 bis 15.

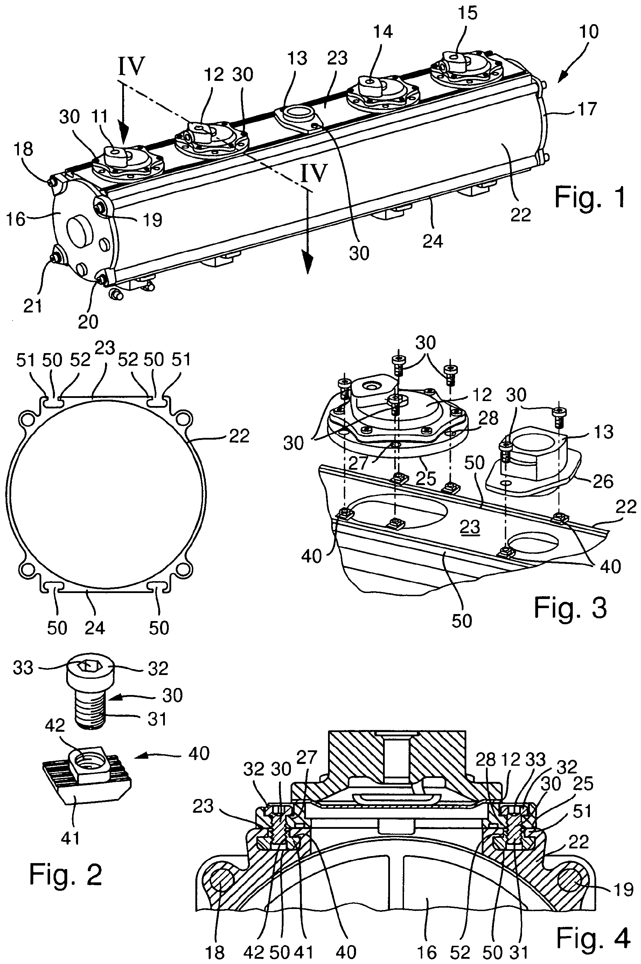

Die besagten Befestigungsmittel weisen einerseits zumindest einen, in der Regel mehrere, am Bauteil 10 lösbar angreifenden Bolzen 30 auf. Diese Bolzen 30 sind z. B. zylindrisch, weisen an einem Ende ein Gewinde 31 auf und am gegenüberliegenden Ende einen Schraubenkopf 32, z. B. mit vertiefter Inbus-Werkzeugangriffsfläche 33. Zu jedem Bolzen 30 gehört ein endseitiger Kopf 40, der in Richtung quer zur Bolzenachse verdickt ist, wobei dieser Kopf 40 einen Querriegel 41 hat und auf diese Weise T-förmig verdickt ist. Bei einem anderen, nicht gezeigten Ausführungsbeispiel kann der verdickte Kopf 40 auch kreisförmig sein. Der Kopf 40 enthält ein Innengewinde 42, in das der Bolzen 30 mit dem Gewinde 31 einschraubbar ist. Teil des Befestigungsmittels ist ferner am Bauteil 10 mindestens eine Nut 50 für den Kopf 40 des jeweiligen Bolzens 30, wobei die Nut 50 eine kurze Axialerstreckung oder, wie beim Beispiel gezeigt ist, eine größere Längserstreckung hat. Die Nut 50 weist eine den Kopf 40 in der Befestigungsposition gemäß Fig. 4 formschlüssig übergreifende Hinterschneidung auf, die an zumindest einer Nutflanke durch einen quer in die Nut 50 vorspringenden, die Nutbreite verkleinernden Steg 51 verwirklicht ist. Beim gezeigten Ausführungsbeispiel weist die Nut beidseitig Stege 51, 52 auf und ist in dieser Weise als T-Nut ausgebildet.

Die Anordnung ist so getroffen, dass am Bauteil 10 auf jeder ebenen Fläche 23, 24, somit oben und unten, an beiden Seiten jeweils eine Nut 50 gleicher Gestaltung vorgesehen ist, wobei die jeweiligen Nuten 50 sich hier über die gesamte Längserstreckung des Rohrprofils 22 erstrecken und z. B. bei der Herstellung als Extrusionsteil z. B. aus Aluminium mitgeformt werden können.

Zum Befestigen z. B. des Bauelements 12 am Bauteil 10 werden z. B. vier gleichartige Bolzen 30 bereitgestellt, die in Löcher 27, 28 des Bauteils 12 eingesteckt und durch diese hindurch gesteckt werden und somit das Bauteil 12 durchsetzen, wobei der Schraubenkopf 32 formschlüssig aufgenommen ist und anliegt. Sodann wird auf das Ende, insbesondere Gewinde 31, jedes Bolzens 30 ein Kopf 40 aufgeschraubt. Nachdem das Bauelement 12 mit seiner Anlagefläche 25 auf die ebene Fläche 23 aufgesetzt ist, können die jeweiligen Bolzen 30 mit endseitigem Kopf 40 in die jeweilige Nut 50 eingesenkt werden, wobei der Kopf 40 mit dem Querriegel 41 so ausgerichtet ist, dass der Querriegel sich in Längsrichtung des Verlaufs der Nut 50 befindet und in die Nut 50 eindringen kann. Der Querriegel 41 ist dabei im Querschnitt höchstens so dick bemessen, wie der Abstand zwischen den beiden Stegen 51, 52 jeder Nut 50 ist, so dass der Querriegel 41 bei dieser Längsausrichtung zwischen die Stege 51, 52 passt und in die Nut 50 eingesenkt werden kann. Der Querabstand der Löcher 27, 28 voneinander entspricht dem Querabstand zwischen den beiden oberseitigen Nuten 50 der Fläche 23 des Rohrprofils 22. Nach Einsenken des Kopfes 40 in die jeweilige Nut 50 kann der jeweilige Bolzen 30 um etwa 90° gedreht werden, so dass der Querriegel 41 des Kopfes 40 sich nun quer zum Längsverlauf der jeweiligen Nut 50 erstreckt und somit von den beidseitigen Stegen 51, 52 oberseitig und formschlüssig übergriffen ist. Anschließend kann der jeweilige Bolzen 30 fest angezogen werden. Dadurch wird das Bauelement 12 mit der Anlagefläche 25 fest gegen die ebene Fläche 23 gespannt und dadurch die Befestigung herbeigeführt, wobei bedarfsweise auch eine Abdichtung erreicht ist.

Wie Fig. 1 zeigt, sind mit Hilfe der beschriebenen Befestigungsmittels mehrere Bauelemente 11 bis 15 am Bauteil 10 lösbar befestigt, jeweils mittels der Bolzen 30 mit Kopf 40 beschriebener Art und der Nuten 50.

Es versteht sich, dass bei einem anderen, nicht gezeigten Ausführungsbeispiel die Verhältnisse auch vertauscht sein können, dergestalt, dass jeweilige Nuten 50 in den Bauelementen vorgesehen sind und die einzelnen Bolzen 30 das Bauteil durchsetzen und zwischen diesem und den Bauelementen eine lösbare feste Verbindung herstellen.

Man erkennt, dass z. B. bei einem schadhaften Bauelement 11 bis 15 dieses schnell und einfach vom Bauteil 10 abmontiert werden kann, ohne die Notwendigkeit der Demontage oder des Versatzes des gesamten Bauteils 10. Die Befestigung der Bauelemente 11 bis 15 am Bauteil 10 kann schnell und einfach bewerkstelligt werden. Dabei sind die Bauelemente 11 bis 15 nicht dauerhaft fest mit dem Bauteil 10 verbunden, wie sonst durch Schweißen, sondern lösbar und schnell austauschbar. Das Rohrprofil 22 ist schnell und kostengünstig herstellbar und benötigt für die Befestigung der Bauelemente 11 bis 15 keine Befestigungslöcher. Durch die Vereinfachung der Herstellung des Zusammenbaus und der Wartung ergibt sich eine Kostenreduzierung. Vorteilhaft ist ferner eine Reduzierung der Bauteile. Sieht man von sonstigen Durchbrüchen für die Funktion im Bauteil 10 ab, ist der Benutzer frei bezüglich des Ortes der Positionierung der Bauelemente 11 bis 15.

Man erkennt, dass das beschriebene Befestigungsmittel auch dann mit Vorteil einsetzbar ist, wenn beim Bauelement statt der Löcher 27, 28 quer gerichtete, nach außen offene Schlitze vorhanden sind, durch die die Bolzen 30 in Querrichtung eingeführt werden können. Statt des als Sammeltank ausgebildeten Bauteils 10 kann dieses auch aus einem anderen Bauteil, z. B. einem Sammler, Tank oder dergleichen Gehäuse bestehen.

## Patentansprüche

1. Aus einem rohrförmigen Element gebildeter Sammeltank (10) mit zumindest einer flachen Außenseite (23, 24), auf der ein Ventil (11, 12, 13, 14, 15) mit seiner ebenen Anlagefläche (25) angeordnet und über zumindest einen Bolzen (30) lösbar befestigt ist,
wobei der zumindest eine Bolzen (30) einen in Richtung quer zur Bolzenachse verdickten Kopf (40) trägt, das Ventil (11, 12, 13, 14, 15) durchsetzt, und an dem Ventil (11, 12, 13, 14, 15) mit einem von dem Kopf (40) abgewandten Schraubenkopf (32) angreift, und
wobei an der flachen Außenseite (23, 24) des Sammeltanks (10) zumindest eine Nut (50) für den Kopf (40) vorgesehen ist, die eine den Kopf (40) in der Befestigungsposition formschlüssig übergreifende Hinterschneidung (51, 52) enthält.

2. Sammeltank nach Anspruch 1, **dadurch gekennzeichnet, dass** die Nut (50) an zumindest einer Nutflanke einen quer in die Nut (50) vorspringenden, die Nutbreite verkleinernden und die Hinterschneidung bildenden Steg (51, 52) aufweist.

3. Sammeltank nach einem der vorhergehenden Ansprüche, **dadurch gekennzeichnet, dass** bei jeder Nutflanke ein Steg (51, 52) vorgesehen ist.

4. Sammeltank nach einem der vorhergehenden Ansprüche, **dadurch gekennzeichnet, dass** die Nut (50) als T-Nut ausgebildet ist.

5. Sammeltank nach einem der Ansprüche 1 bis 4, **dadurch gekennzeichnet, dass** der verdickte Kopf (40) kreisförmig ist.

6. Sammeltank nach einem der Ansprüche 1 bis 4, **dadurch gekennzeichnet, dass** der verdickte Kopf (40) einen Querriegel (41) hat.

7. Sammeltank nach einem der vorhergehenden Ansprüche, **dadurch gekennzeichnet, dass** der verdickte Kopf (40) T-förmig verdickt ist.

8. Sammeltank nach einem der vorhergehenden Ansprüche, **dadurch gekennzeichnet, dass** die Nut (50) am Bauteil (10) vorgesehen und als längsverlaufende und etwa parallel zur Längserstreckung des Bauteils (10) verlaufende T-Nut ausgebildet ist.

9. Sammeltank nach einem der vorhergehenden Ansprüche, **dadurch gekennzeichnet, dass** mehrere Bauelemente (11 bis 15) mittels jeweiliger Bolzen (30) an einem gemeinsamen Bauteil (10) lösbar befestigt sind.

10. Sammeltank nach einem der vorhergehenden Ansprüche, **dadurch gekennzeichnet, dass** die Bolzen (30) Durchbrüche oder Löcher (27, 28) in den Bauelementen (11 bis 15) durchsetzen.

## Claims

1. Collection tank (10) formed from a tubular element, comprising at least one flat exterior side (23, 24) at which a valve (11, 12, 13, 14, 15) is placed with its planar abutment surface (25) and detachably attached by at least one bolt (30),
wherein the at least one bolt (30) supports a head (40) that is thickened in a direction transverse to the bolt axis, extends through the valve (11, 12, 13, 14, 15), and engages the valve (11, 12, 13, 14, 15) by means of a screw head (32) facing away from the head (40), and
wherein at least one groove (50) for the head (40) is provided at the flat exterior side (23, 24) of the collection tank (10) that comprises an undercut (51, 52) that overlaps the head (40) in the attachment position in a positive-fit fashion.

2. Collection tank according to claim 1, **characterized in that** the groove (50) comprises, at at least one groove flank, a bar (51, 52) transversely protruding in the groove (50), reducing the groove width and forming the undercut.

3. Collection tank according to any of the preceding claims, **characterized in that** at each groove flank a bar (51, 52) is provided.

4. Collection tank according to any of the preceding claims, **characterized in that** the groove (50) is arranged as T-groove.

5. Collection tank according to any of claims 1 to 4, **characterized in that** the thickened head (40) is circular.

6. Collection tank according to any of claims 1 to 4, **characterized in that** the thickened head (40) comprises a cross-bar (41).

7. Collection tank according to any of the preceding claims, **characterized in that** the thickened head (40) is thickened in a T-shaped manner.

8. Collection tank according to any of the preceding claims, **characterized in that** the groove (50) is provided at the component (10) and formed as a longitudinally extending and approximately parallel to the longitudinal extension of the component (10) extending T-groove.

9. Collection tank according to any of the preceding claims, **characterized in that** a plurality of parts (11 to 15) is detachably attached by respective bolts (30) at a common component (10).

10. Collection tank according to any of the preceding claims, **characterized in that** the bolts (30) extend through recesses or holes (27, 28) in the parts (11 to 15).

## Revendications

1. Réservoir collecteur (10) formé à partir d'un élément tubulaire, comprenant au moins un côté extérieur plat (23, 24), sur lequel une soupape (11, 12, 13, 14, 15) est disposée avec sa surface d'appui plane (25) et est fixée de manière détachable par le biais d'au moins un boulon (30),
l'au moins un boulon (30) portant une tête (40) épaissie dans la direction transversale à l'axe du boulon, traversant la soupape (11, 12, 13, 14, 15), et s'engageant au niveau de la soupape (11, 12, 13, 14, 15) avec une tête de vis (32) opposée à la tête (40), et
au moins une rainure (50) pour la tête (40) étant prévue au niveau du côté extérieur plat (23, 24) du réservoir collecteur (10), laquelle contient une contre-dépouille (51, 52) venant en prise par le dessus par engagement par correspondance de formes avec la tête (40) dans la position de fixation.

2. Réservoir collecteur selon la revendication 1, **caractérisé en ce que** la rainure (50) présente au niveau d'au moins un flanc de rainure une nervure (51, 52) saillant transversalement dans la rainure (50), réduisant la largeur de la rainure et formant la contre-dépouille.

3. Réservoir collecteur selon l'une quelconque des revendications précédentes, **caractérisé en ce que** pour chaque flanc de rainure est prévue une nervure (51, 52).

4. Réservoir collecteur selon l'une quelconque des revendications précédentes, **caractérisé en ce que** la rainure (50) est réalisée sous forme de rainure en forme de T.

5. Réservoir collecteur selon l'une quelconque des revendications 1 à 4, **caractérisé en ce que** la tête épaissie (40) est de forme circulaire.

6. Réservoir collecteur selon l'une quelconque des revendications 1 à 4, **caractérisé en ce que** la tête épaissie (40) présente une barre transversale (41).

7. Réservoir collecteur selon l'une quelconque des revendications précédentes, **caractérisé en ce que** la tête épaissie (40) est épaissie en forme de T.

8. Réservoir collecteur selon l'une quelconque des revendications précédentes, **caractérisé en ce que** la rainure (50) est prévue au niveau du composant (10) et est réalisée sous forme de rainure en forme de T s'étendant longitudinalement et approximativement parallèlement à l'étendue longitudinale du composant (10).

9. Réservoir collecteur selon l'une quelconque des revendications précédentes, **caractérisé en ce que** plusieurs éléments de construction (11 à 15) sont fixés de manière détachable au moyen de boulons respectifs (30) au niveau d'un composant commun (10).

10. Réservoir collecteur selon l'une quelconque des revendications précédentes, **caractérisé en ce que** les boulons (30) traversent des orifices ou des trous (27, 28) dans les éléments de construction (11 à 15).
